# EUROPÄISCHE PATENTSCHRIFT

(11) **EP 1 914 857 B1**
(45) Veröffentlichungstag und Bekanntmachung des Hinweises auf die Patenterteilung: **22.07.2009**
(21) Anmeldenummer: 06022110.8
(22) Anmeldetag: 21.10.2006
(51) Int. Cl.: H02H 3/28

(54) **Schaltungseinrichtung und Verfahren, insbesondere für Photovoltaik-Generatoren**
Circuit apparatus and method, in particular for photovoltaic generators
Dispositif de circuit électrique et procédé, en particulier pour des générateurs photovoltaic

(43) Veröffentlichungstag der Anmeldung: 23.04.2008
(73) Patentinhaber: SMA Solar Technology AG, 34266 Niestetal (DE)
(72) Erfinder: Müller, Burkard, 34123 Kassel (DE); Greizer, Frank, 34260 Kaufungen (DE)
(74) Vertreter: Walther, Walther & Hinz GbR

(56) Entgegenhaltungen:
- EP-A2- 1 039 621
- DE-A1- 2 630 597
- DE-A1- 3 725 476
- DE-A1- 4 041 672
- DE-A1- 4 102 069
- DE-A1- 4 325 436
- DE-A1- 10 312 921
- JP-A- 7 241 077
- JP-A- 11 312 022
- JP-A- 2004 070 709
- JP-A- 2004 254 447
- JP-A- 2006 238 629

## Beschreibung

Die Erfindung betrifft einen Wechselrichter, insbesondere für den Einsatz in einer Photovoltaik-Anlage mit einem Gleichspannungseingang für einen Photovoltaik-Generator und einen Wechselspannungs-Ausgang beispielsweise zur Einspeisung in ein Energieversorgungsnetz sowie einem DC/AC-Wandler mit Halbleiterschaltelementen, sowie ein Verfahren zum Schutz vor Überspannung insbesondere einer Photovoltaik-Anlage mit einem erfindungsgemäßen Wechselrichter.

Photovoltaik-Anlagen zur Erzeugung elektrischer Energie umfassen einen Solarwechselrichter, der beispielsweise eine Halbleiterbrücke aufweist, die von einem Solargenerator erzeugte Gleichspannung in eine Wechselspannung umwandelt.

In den Solarwechselrichtern liegt beim Takten der Brücke die volle Spannung des Solargenerators an den Einzelhalbleitern an. Bei einer im Idealfall unterbrechungsfreien Einspeisung des Solarwechselrichters über den ganzen Tag, könnten die Halbleiter auf eine sogenannte MPP-Spannung (Maximum Power Point) des Solargenerators ausgelegt werden. Die MPP-Spannung ist die Spannung an einem Leistungsmaximum der Generatorkennlinie des Solargenerators. Häufig kommt es jedoch zu Unterbrechungen der Einspeisung durch Netzstörungen oder andere Ursachen. Damit der Solarwechselrichter nach solchen Unterbrechungen wieder anlaufen kann, muss er an der Leerlaufspannung des Generators takten, die dann auch an den Einzelhalbleitern anliegt. Diese Leerlaufspannung kann die MPP-Spannung je nach Generatortyp um 25% und mehr übersteigen. Die Einzelhalbleiter müssen deshalb für diese deutlich höhere Spannung ausgelegt werden. Die Auswahl von Halbleitern einer höheren Spannungsklasse bringt jedoch höhere Durchlassverluste und damit einen geringeren Wirkungsgrad des Wechselrichters mit sich. Umfasst der Wechselrichter auch einen Pufferkondensator, muss auch dieser auf eine höhere Spannung ausgelegt werden. Der Pufferkondensator wird nicht nur größer, sondern auch deutlich teurer.

Bestehende Installationsvorschriften lassen häufig nur bestimmte Maximalspannungen zu. Beispielsweise dürfen in den USA nur Solaranlagen installiert werden, an denen eine Spannung von 600V nicht überschritten wird. Da Betriebsstörungen beim Einspeisen nie ausgeschlossen werden können, werden die Generatoren von Solaranlagen in der Regel so dimensioniert, dass ihre Leerlaufspannung den Grenzwert von 600V nicht überschreitet.

In der DE-A- 40 41 672, die einen Photovoltaikwechselrichter mit den Merkmalen des Oberbegriff des Anspruchs 1 zeigt, ist eine Schutzvorrichtung mit einer Überwachungseinrichtung für störungsbedingte Spannungserhöhungen für photovoltaische Energieerzeugungsanlagen gezeigt und beschrieben, wobei ein Stromfluss durch einen Leitungsabschnitt unterbrochen wird. Die Schutzvorrichtung umfasst einen Kurzschlussstromkreis mit einem elektrisch ansteuerbaren Schalter.

Bei einer anderen Schrift, und zwar der JP 2004 254447 A ist ein Wechselrichter für ein Photovoltaikgenerator offenbart. Hierbei ist das Kurzschließen der DC-Seite vorgesehen. Hierbei ist ein Pufferkondensator an der DC-Seite sowie drei Dioden vorgesehen. Die Dioden sind unmittelbar hinter dem Generator angeordnet, so dass bei Kurzschließen der DC-Seite der Pufferkondensator sofort entladen wird.

Die JP 2004 070709 A beschreibt eine Schutzschaltung mit einem Kurzschluss-Schaltkreis. Hierbei wird ein shunt zur Spannungsbegrenzung eingesetzt.

Auch bekannt ist aus der DE 37 25 476 A1 eine Schaltungsanordnung zur Speisung einer elektrischen Last aus einer elektrischen Energiequelle mit schwankender Leistungsfähigkeit. Die Schaltungsanordnung dient zur Speisung einer elektrischen Last aus einem Solargenerator. Parallel zum Solargenerator liegt ein Kondensator 2. Die Steuerung erfolgt derart, dass bei Spannungen unterhalb eines vorgegebenen Mindestwertes, der für einen sicheren Betrieb der Speisevorrichtung erforderlich ist, eine Vorlast und bei Spannungen oberhalb des vorgegebenen Mindestwertes ein Hilfsspannungseingang der Speisevorrichtung an den Solargenerator angeschlossen ist.

Die Druckschrift JP 11 312022 A zeigt und beschreibt einen Wechselrichter, der für Photovoltaik-Generatoren eingesetzt werden soll. Die Schaltung umfasst eine Spule, ein Schaltelement, das die Spule kurzschließt, eine Diode und hinter der Diode einen Kondensator. Weiterhin ist ein chopper-Schaltkreis vorhanden, dessen Funktion bei zu hohen Generatorspannungen eingestellt werden soll.

Aus der EP 1 039 621 B1 ist eine photovoltaische Leistungsgeneratorvorrichtung für den Schutz eines Leistungsinverters gegenüber einer Überspannung bekannt. Bei diesem System wird ein Gleichstrom des Solargenerators in einen Wechselstrom umgewandelt. Die Schrift erörtert das Problem, dass ein herkömmlicher Leistungsinverter nicht unmittelbar startet, nachdem er in der Solarzellenvorrichtung erzeugte Leistung erhalten hat, sondern erst nach einer vorbestimmten Zeitspanne nach dem Überprüfen der Ausgabe von der Solarzellenvorrichtung startet. Dies wird daher vorgenommen, weil eine gewisse Zeit für den Selbsttest des Leistungsinverters benötigt wird. Weil der herkömmliche Leistungsinverter dadurch später startet, steigt die offene Spannung am Solargenerator. In der Folge müssen die Halbleiter des herkömmlichen Leistungsinverters für eine höhere Spannung als die Betriebsspannung ausgelegt werden. Dies bewirkt eine Verschlechterung der Betriebseffizienz. Daher wird in der EP 1 039 621 B1 eine Schaltung vorgeschlagen, die ein Schaltelement mit einen Vorwiderstand umfasst. Hierdurch soll ein Ansteigen der Spannung unterdrückt werden. Der Vorwiderstand in der Schaltung ist so eingestellt, dass die Generatorspannung die maximale Betriebsspannung des Leistungsinverters nicht übersteigt und die Halbleiter des Leistungsinverters damit nur auf die maximale Betriebsspannung ausgelegt werden müssen. Die Schaltung umfasst mehrere Transistoren, wobei der Vorwiderstand in Reihe zu einem der Transistoren liegt. Nach der EP 1039621 B1 wird praktisch an den Generator ein Parallelzweig angeschlossen, der einen definierten Arbeitsstrom vom Generator abnimmt und dadurch verhindert, dass sich an den Generatorklemmen die Leerlaufspannung einstellt. Dieser Zweig wird erst stillgelegt, wenn ein gewisser Mindeststrom vom Wechselrichter abgenommen wird und damit sichergestellt ist, dass die Leerlaufspannung auch ohne den Zusatzzweig nicht mehr erreicht wird. Dieses Verfahren hat jedoch den Nachteil, dass der Querzweig bei kleinen eingespeisten Leistungen noch eine Weile aktiv bleibt und dadurch Leistung nicht genutzt wird. Weiterhin muss der Querzweig gut auf den angeschlossenen Solargenerator abgestimmt sein, um die Spannung wirkungsvoll zu begrenzen. Bei einem Wechselrichter, der flexibel mit verschiedenen Modultypen und Stringströmen arbeiten soll, müsste der Querzweig immer auf den maximal möglichen Strom ausgelegt werden, wodurch die Verluste noch größer würden. Wenn der Wechselrichter nach einer Störung wiederanlaufen soll, muss der Vorwiderstand sogar auf die volle Leistung des Photovoltaik-Generators ausgelegt werden.

Aus der DE 103 12 921 A1 ist eine Schaltungsanordnung zur Nutzung einer von mindestens einem Solargenerator erzeugten Gleichspannung bekannt. Die Schaltungsanordnung umfasst einen Kondensator und eine dem Kondensator nachgeschaltete Wechselrichterschaltung. Mit dieser Schaltungsanordnung wird eine Verwendung von handelsüblichen Wechselrichtern mit Potentialtrennung auch für Dünnfilm-Solarzellen bei einem verbesserten Wirkungsgrad möglich. Bei dieser Lösung wird dem Kondensator ein Schaltelement vorgeschaltet. Das Schaltelement liegt in Reihe mit dem Generator und einer Halbleiterbrücke zwischen dem Generator und der Halbleiterbrücke. Die Schaltungsanordnung sorgt dafür, dass bei Überschreiten einer definierten ersten Generatorspannung des Solargenerators das Schaltelement geöffnet und bei Unterschreiten der ersten Generatorspannung oder einer zweiten, im Verhältnis zur ersten Generatorspannung geringeren, Generatorspannung das Schaltelement eingeschaltet wird, so dass der für die Wechselrichterschaltung mögliche Eingangsspannungsbereich erhöht wird.

Bei dieser Schaltung wird bei einem Anstieg der Zwischenkreisspannung über einen bestimmten Grenzwert hinaus der Generator durch einen zusätzlichen Leistungsschalter vom Zwischenkreis getrennt, wodurch Zwischenkreis und Generator nur auf den eingestellten Grenzwert ausgelegt werden müssen und Halbleiter mit kleinen Durchlassverlusten verwendet werden können. Da die Trennung nach Unterschreiten eines zweiten, kleineren Spannungsgrenzwerts wieder aufgehoben wird, bleibt der Wechselrichter praktisch getaktet mit dem Generator verbunden und kann aus einer Störung wieder angefahren werden. Dieses Prinzip löst zwar das eingangs beschriebene Problem, dass Einzelhalbleiter für eine deutlich höhere Spannung ausgelegt werden müssen, weil nach einer Netzstörung oder Unterbrechung der Wechselrichter an die Leerlaufspannung des Generators angeschlossen werden muss. Die Schaltung löst jedoch nicht das spezielle Problem, dass, durch Installationsvorschriften bedingt, in einigen Ländern Maximalspannungen eingehalten werden müssen, beispielsweise 600 Volt in den USA. Durch die vorgeschlagene Schaltung liegt am Generator bei jedem Trennvorgang die Leerlaufspannung an.

Der Erfindung liegt demzufolge die Aufgabe zugrunde, einen Wechselrichter der gattungsgemäßen Art auf kostengünstige Weise so zu verbessern, dass auch bei hohen Generatorleerlaufspannungen einerseits ein Wiederanlauf nach einer Betriebsstörung problemlos verläuft und andererseits Vorschriften in Ländern wie USA eingehalten werden können.

Diese Aufgabe wird durch die kennzeichnenden Merkmale des Anspruches 1 in Verbindung mit seinen Oberbegriffsmerkmalen oder durch die Merkmale des Verfahrensanspruches 11 gelöst. Die Erfindung ist ein Photovoltaik-Wechselrichter für den Einsatz in einer Photovoltaik-Anlage mit einem Gleichspannungseingang für einen Photovoltaikgenerator und einen Wechselspannungs-Netzausgang sowie einer aus Halbleiterschaltelementen bestehenden Wechselrichterbrücke mit mindestens einem Pufferkondensator, wobei parallel zum Photovoltaikgenerator mindestens ein Kurzschluss-Schaltelement, das der Schalter eines Hochsetzsteller des Wechselrichters ist, angeschlossen ist, das derart ansteuerbar ist, dass bei Überschreiten eines Spannungsgrenzwertes dieses so geschaltet wird, dass der Photovoltaikgenerator in einen Kurzschlussbetrieb überführt wird und bei einem Unterschreiten des Spannungsgrenzwertes das Schaltelement wieder eingeschaltet wird, so dass der Photovoltaikgenerator den Kurzschlussbetrieb verlässt.

Zudem ist erfindungsgemäß vorgesehen, dass der Wechselrichter mit einem Pufferkondensator über eine Schutzdiode an den Photovoltaik-Generator angeschlossen ist, so dass der Pufferkondensator bei Ansteuerung des Kurzschluss-Schaltelementes nicht entladen wird. Die Spannung an dem Pufferkondensator wird gemessen. Überschreitet diese Spannung einen vorgegebenen Grenzwert, wird das erfindungsgemäße Schaltelement bzw. der Leistungsschalter eingeschaltet. Bei einer geringfügig kleineren Spannung wird der Leistungsschalter wieder ausgeschaltet. Alternativ kann die Spannungsmessung in eine zweckmäßige Regelschaltung integriert werden, die den Leistungsschalter ansteuert. Am Wechselrichter liegt damit immer Arbeitsspannung an, so dass dieser selbst nach einer Betriebsstörung wieder anlaufen kann.

Die Erfindung bezieht sich auf den Einsatz eines solchen Wechselrichters für Photovoltaikanlagen.

Weitere vorteilhafte Merkmale betreffend die Ausgestaltung des Wechselrichters sind den Unteransprüchen zu entnehmen.

Die Erfindung beruht auf dem Gedanken, dass, wenn man die Generatoren auf ihre MPP-Spannung begrenzen könnte, sich mehr Module in Reihe schalten lassen, ohne die kritische Grenze zu verletzen. Dadurch würde die Flexibilität bei der Anlagenplanung steigen und die Anzahl der einzelnen zu regelnden Strings abnehmen.

Die erfindungsgemäße Lösung zeichnet sich demzufolge dadurch aus, dass die Spannung sowohl am Photovoltaik-Generator wie auch am Eingang des Wechselrichters auf die maximale Arbeitsspannung des Wechselrichters begrenzt wird und die Leerlaufspannung des Photovoltaik-Generators vom Wechselrichtereingang und damit dessen Halbleiterschaltern fern gehalten wird, wobei der

Wechselrichter getaktet mit dem Solargenerator verbunden bleibt, um einen einfachen Anlauf morgens wie auch einen Wiederanlauf nach einer Betriebsstörung zu ermöglichen.

Daher ist parallel zum Photovoltaik-Generator mindestens ein Kurzschluss-Schaltelement angeschlossen, das derart ansteuerbar ist, dass bei Überschreiten eines Spannungsgrenzwertes dieses so geschaltet wird, dass der Photovoltaik-Generator in einen Kurzschlussbetrieb überführt wird und bei einem Unterschreiten des Spannungsgrenzwertes das Schaltelement wieder ausgeschaltet wird, so dass der Photovoltaik-Generator den Kurzschlussbetrieb verlässt. Dadurch ist es nicht nur möglich, das Problem eines Wiederanlaufs zu lösen, sondern auch, dass den Vorschriften in Ländern wie USA Genüge getan wird. Anstelle des beschriebenen Zweipunktreglers können auch andere Regler, wie P-, PI-oder PID-Regler, verwendet werden.

Die Erfindung besteht im Wesentlichen darin, dass ein per Steuersignal ein- und ausschaltbarer Schalter, insbesondere ein Leistungsschalter, parallel zum Photovoltaik-Generator angeordnet und so getaktet betrieben wird, dass dadurch die Eingangsspannung des Wechselrichters in einem definierten Spannungsbereich unterhalb der Leerlaufspannung des Generators gehalten werden kann.

Eine Einsparung eines zusätzlichen Bauteils bzw. Schaltelementes bringt die Erfindung mit sich die auch darin besteht, dass das Kurzschluss-Schaltelement ein Schalter eines Hochsetzstellers des Wechselrichters ist. Dadurch werden zwei Funktionen von einem Schaltungsaufbau übernommen. Dies führt zu einer eleganten Vereinfachung der Schaltung und zu geringeren Verlusten.

Erfindungsgemäß wird eine Induktivität zwischen Solargenerator und dem Kurzschluss-Schaltelement eingesetzt. Diese nimmt dann beim Einschalten des Kürzschluss-Schaltelements dann zumindest einen Teil der in der Kapazität enthaltenen Energie auf. Erfindungsgemäß ist eine solche Induktivität vorhanden und wird dazu benutzt, um das Kurzschluss-Schaltelement strombegrenzt zu betreiben. Dazu wird letzteres bei einer bestimmten Stromstärke, die deutlich über dem normalen Generatorstrom liegt, ausgeschaltet und mit einer bestimmten Taktfrequenz, bzw. nach Unterschreiten einer vorgegebenen, kleineren Stromstärke wieder eingeschaltet. Ist gleichzeitig im Zwischenkreis ein Pufferkondensator mit vorgeschalteter Diode vorhanden, ergibt sich dadurch als besonderer Vorteil, dass der Energieinhalt der Eingangskapazität über das Hochsetzstellerprinzip in die Pufferkondensatoren des Wechselrichters übertragen wird und nicht in Wärme umgesetzt werden muss. Dadurch ergibt sich eine hohe Toleranz der Schaltung gegenüber der Größe der Eingangskapazität. Grundsätzlich ist eine Widerstands-Induktivitäts-Kombination auch möglich.

Besonders vorteilhaft ist es, wenn das Kurzschluss-Schaltelement ein Halbleiterschalter, insbesondere ein Transistor oder ein ausschaltbarer Thyristor, ist. Auf diese Weise kann eine schnelle Ausregelung der Wechselrichtereingangsspannung ermöglicht werden.

Besitzt der Solargenerator eine signifikante Kapazität oder ist durch die Integration der Schaltung in einem Hochsetzsteller dessen Eingangskapazität vor dem Leistungsschalter angeordnet, muss bei jedem Einschalten des Leistungsschalters die vorhandene Kapazität entladen werden. Damit die enthaltene Energie nicht bzw. nicht vollständig vom Leistungsschalter in Wärme umgesetzt werden muss, sind verschiedene weitere Ausgestaltungen der Erfindung möglich.

Eine Weiterbildung der Erfindung besteht daher darin, dass in Reihe zum Kurzschluss-Schaltelement ein Lastwiderstand angeordnet ist. Der in Reihe zum Schaltelement angeschlossene Lastwiderstand setzt den Energieinhalt der Kapazität in Wärme um. Optional kann auch ein Kurzschluss-Schaltelement ohne Lastwiderstand mit einem oder mehreren Leistungsschaltern mit Lastwiderstand parallel geschaltet werden, wobei das Kurzschluss-Schaltelement erst eingeschaltet wird, wenn ein Großteil der gespeicherten Energie bereits in Wärme umgesetzt worden ist.

Weitere vorteilhafte Ausgestaltungen der Erfindung nicht nur in Bezug auf den Wechselrichter, sondern auch betreffend das Verfahren, sind in den Unteransprüchen beschrieben.

Ein Ausführungsbeispiel wird anhand der Zeichnungen näher erläutert, wobei weitere vorteilhafte Weiterbildungen der Erfindung und Vorteile derselben beschrieben sind.

Es zeigen:
- Fig. 1: eine schematische Darstellung einer Photovoltaik-Anlage mit einem Generator und mit einem erfindungsgemäßen Wechselrichter, der an ein Stromversorgungsnetz angeschlossen ist (Stand der Technik),
- Fig.2: eine schematische Darstellung einer Photovoltaik-Anlage mit einem Generator und mit einem erfindungsgemäßen Wechselrichter mit einem Zwischenkreis und einem DC/AC-Wandler in Form einer Brückenschaltung mit anschließendem Transformator, der an ein Stromversorgungsnetz angeschlossen ist,
- Fig. 3: eine Darstellung einer ersten Schaltung zur Erläuterung der erfindungsgemäßen Lösung,
- Fig. 4: eine Darstellung einer zweiten Schaltung zur Erläuterung der erfindungsgemäßen Lösung,
- Fig. 5: eine Darstellung einer anderen Schaltung,
- Fig. 6: eine Darstellung der erfindungsgemäßen Lösung,
- Fig. 7: eine Darstellung der erfindungsgemäßen Lösung.

In den Figuren sind gleiche Bauteile mit denselben Bezugszeichen versehen.

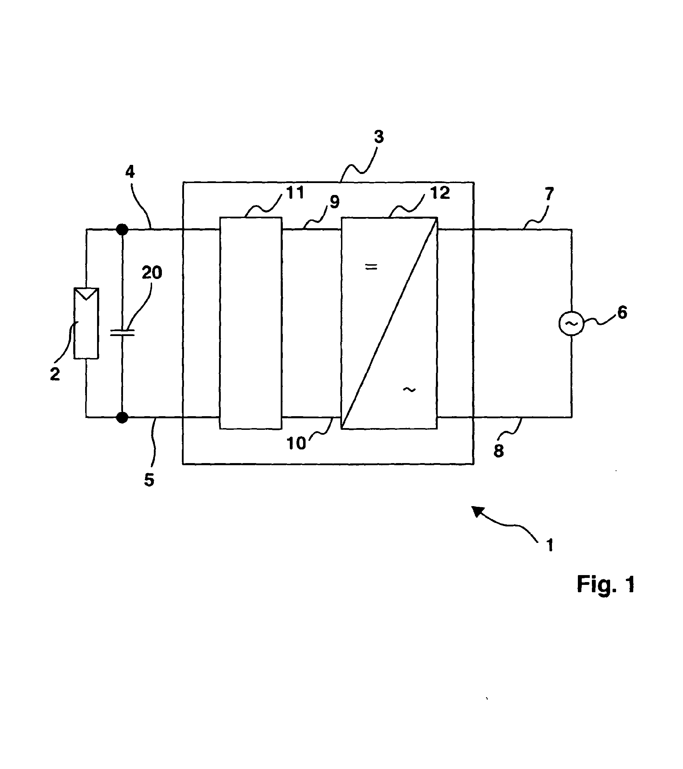

In Fig. 1 ist eine Photovoltaik-Anlage 1 abgebildet. Diese umfasst einen Generator 2, der als Photovoltaik-Generator ausgeführt ist. Er kann aus mehreren Modulen bestehen. Hier ist jedoch nur eines dargestellt. Der Photovoltaik-Generator 2 ist mit einem Wechselrichter 3 über Anschlussklemmen 4, 5 verbunden. An den Klemmen 4, 5 liegt eine Gleichspannung an. Der Wechselrichter 3, bestehend aus einem Zwischenkreis 11 und einem DC/AC-Wandler 12, ist an ein Stromversorgungsnetz 6, insbesondere an ein Niederspannungs-Netz angeschlossen. Die Anschlüsse 7, 8 dienen als Wechselspannungs-Netzausgang. Über die Anschlüsse 9 und 10 sind der Zwischenkreis 11 und der DC/AC-Wandler 12 miteinander verbunden. Der Photovoltaik-Generator 2 weist eine interne Kapazität, die als Kondensator 20 dargestellt ist, auf. Der DC/AC-Wandler 12 kann beispielsweise auch als DC/DC/AC-Wandler ausgeführt sein.

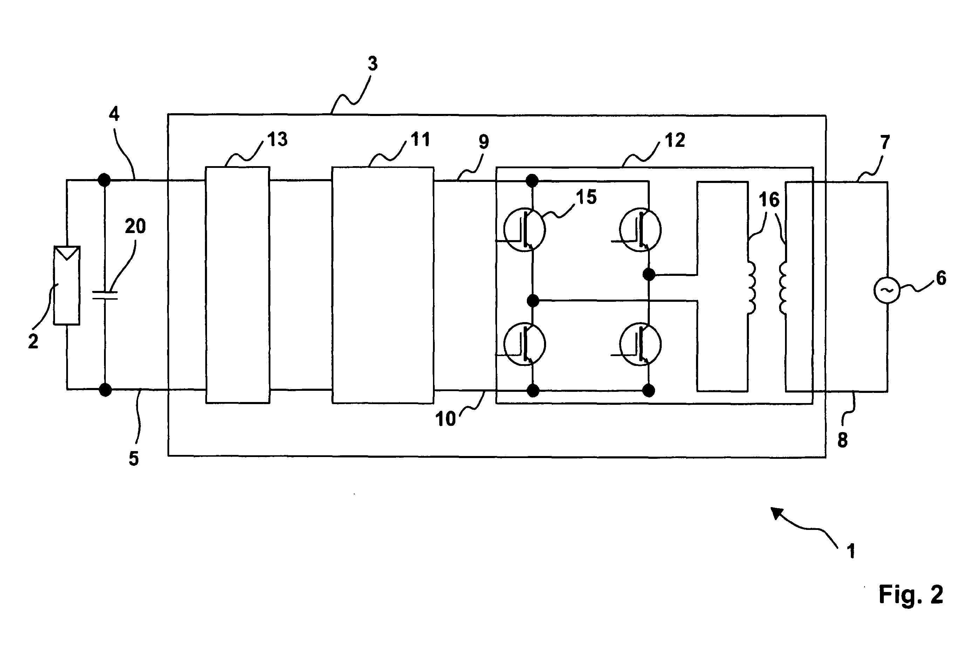

Fig.2 zeigt eine Photovoltaik-Anlage 1 mit einem erfindungsgemäßen Wechselrichter 3. Der Wechselrichter 3 besteht aus einer erfindungsgemäßen Spannungs-Begrenzungsschaltung 13, die mit dem Photovoltaik-Generator 2 über die Anschlüsse 4 und 5 verbunden ist und dem Zwischenkreis 11 vorgeschaltet ist. Der DC/AC-Wandler 12 ist hier beispielhaft als Vollbrücke mit Halbleiterbauelementen 15 und einem Transformator 16, insbesondere einem 50Hz-60Hz Transformator, zur galvanischen Trennung des Netzes 6. ausgeführt. Prinzipiell sind für den DC/AC-Wandler auch andere für die Netzeinspeisung geeignete Topologien einsetzbar. Der Zwischenkreis dient zur Zwischenspeicherung elektrischer Energie, die durch Ansteuerung der Halbleiterschaltelemente 15 in Wechselstrom gewandelt wird. Der Zwischenkreis kann als Pufferkondensator ausgeführt sein. Es können dabei ein oder mehrere Pufferkondensatoren vorhanden sein.
In manchen Anlagen kann der Pufferkondensator durch eine Zwischenkreis-Drossel ersetzt oder ganz weggelassen werden. Fig. 2 zeigt also einen Wechselrichter 3 innerhalb einer Photovoltaik-Anlage 1 zum Anschluss an einen Photovoltaik-Generator 2 mit einem Gleichspannungseingang (Klemmen 4 und 5) und einen Wechselspannungs-Netzausgang (Klemmen 7 und 8)zur Einspeisung in ein Energieversorgungsnetz 6.

Erfindungsgemäß ist dem Photovoltaik-Generator 2 eine Spannungsbegrenzungs-Einrichtung 13 nachgeschaltet, die in der einfachsten Ausführung aus einem Kurzschluss-Schaltelement besteht, das parallel zum Photovoltaik-Generator 2 angeschlossen und derart ansteuerbar ist, dass bei Überschreiten eines Spannungsgrenzwertes dieses so geschaltet wird, dass der Photovoltaik-Generator 2 in einem Kurzschlussbetrieb überführt wird und bei einem Unterschreiten des Spannungsgrenzwertes das Schaltelement wieder ausgeschaltet wird, so dass der Photovoltaik-Generator 2 den Kurzschlussbetrieb verlässt.

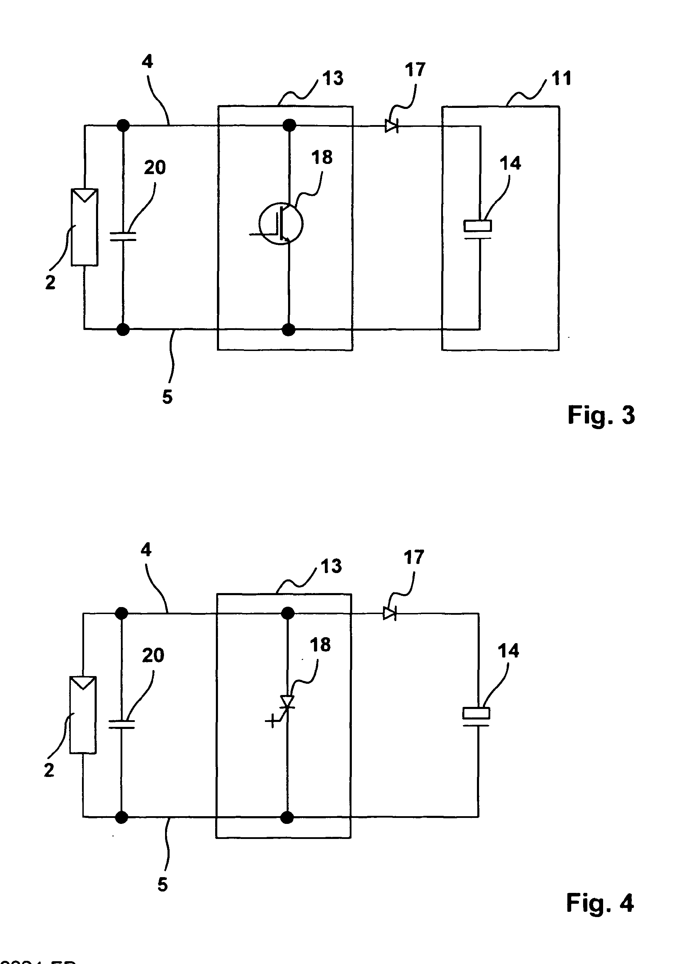

Fig. 3 zeigt eine Variante mit einem Pufferkondensator 14 im Zwischenkreis 11. Dieser Pufferkondensator 14 wird über eine Schutzdiode 17 an den Photovoltaik-Generator 2 angeschlossen. Als Kurzschluss-Schaltelement 18 dient ein Transistor, vorzugsweise ein Leistungstransistor. Der Transistor liegt zwischen Schutzdiode 17 und Photovoltaik-Generator 2. Wird der Transistor angesteuert, sinkt die Spannung am Generator 2. Die Spannung am Kondensator 14 ist höher als an den Generatorklemmen, wodurch die Diode 17 sperrt. Dadurch wird der Pufferkondensator 14 bei Ansteuerung des Transistors 18 nicht entladen.

In Fig.4 ist der Leistungstransistor durch einen abschaltbaren Thyristor (GTO) ersetzt. Prinzipiell kann auch ein Thyristor mit einer geeigneten Löschschaltung verwendet werden. Ein Thyristor oder GTO zeichnet sich im Gegensatz zum IGBT durch höchste Energiedissipation bei Einhaltung des Grenzlastintegrals aus.

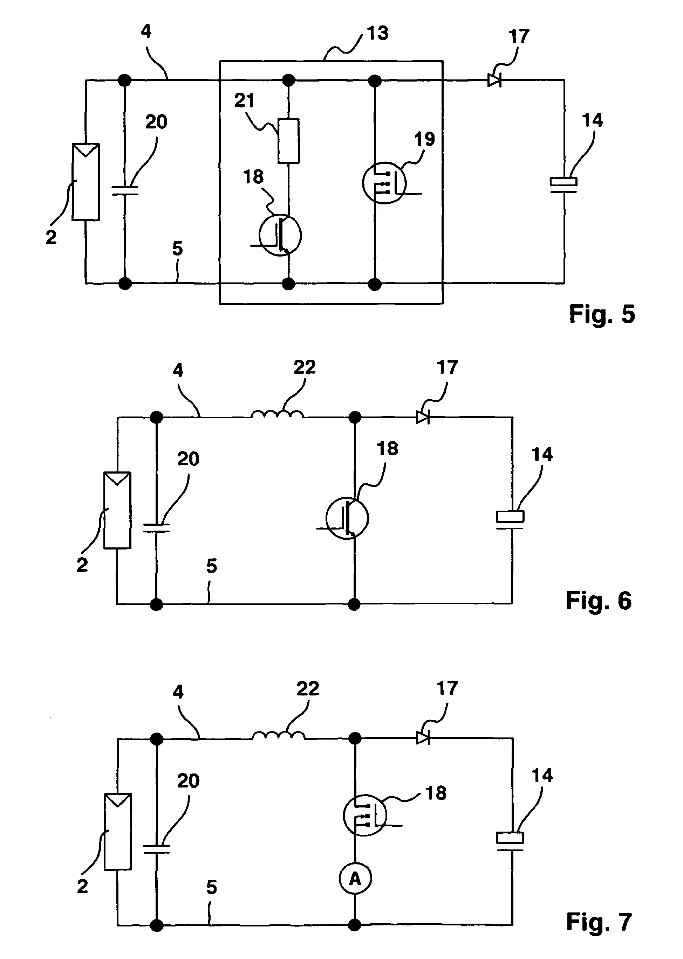

Wie die Variante in Fig. 5 zeigt, kann in Reihe zum Kurzschluss-Schaltelement 18 ein Lastwiderstand 21 angeordnet sein. Durch diesen kann bei einem Einschalten des Halbleiterschalters 18 die interne Kapazität 20 des Photovoltaik-Generators 2 entladen werden. Auf diese Weise wird die in der Kapazität 20 enthaltene Energie nicht bzw. nicht vollständig im Leistungsschalter 18 in Wärme umgesetzt. Als Leistungsschalter 18 eignet sich ein Transistor, wie beispielsweise ein IGBT, oder ein ausschaltbarer Thyristor.

In einer besonderen Ausgestaltung kann wie in Fig.5 gezeigt parallel zum Leistungsschalter 18 und dessen vorgeschaltetem Lastwiderstand 21 ein weiterer Schalter 19 angeordnet sein. Im ersten Schritt wird der Leistungsschalter 18 geschlossen und der Entladevorgang des Kondensators 20 setzt ein. Ist die Spannung über dem Kondensator 20 auf eine niedrige Spannung gesunken, wird der Schalter 19 eingeschaltet. Diese Vorgehensweise hat den Vorteil, dass fast die gesamte in der Kapazität 20 enthaltene Energie im Widerstand 21 in Wärme umgesetzt wird, ohne dass dieser bei andauerndem Kurzschluss ständig Leistung aufnimmt.

Wird Schalter 19 wieder geöffnet, muss auch das Schaltelement 18 wieder ausgeschaltet werden. Der Leistungsschalter 18 kann auch sofort nach Zuschalten des Schalters 19 ausgeschaltet werden. Da Schalter 19 nur wenig Energie dissipieren muss, eignet sich in besonderer Weise, wie in Fig.5 gezeigt, ein MOSFET, insbesondere ein niederohmiger MOSFET.

Alternativ kann auch zwischen dem Photovoltaik-Generator 2 und dem Kurzschluss-Schaltelement 18 eine Induktivität 22 angeschlossen sein, wie Fig. 6 zeigt. Die Induktivität 22 liegt zwischen Schalter 18 und Generator 2. Beim Einschalten des Schaltelementes 18 nimmt die Induktivität 22 dann zumindest einen Teil der in der Kapazität 20 enthaltenen Energie auf.

Bei einigen Solarwechselrichtern ist dem DC/AC-Wandler 12 ein Hochsetzsteller vorgeschaltet, um eine Spannungsanpassung zur Wirkungsgradverbesserung zu erreichen. Damit ist eine Induktivität vorhanden, so dass keine zusätzliche Induktivität eingesetzt werden, weil die vorhandene Induktivität für den beschriebenen Zweck eingesetzt werden kann. Wenn keine Induktivität vorhanden ist, dann kann zwischen Generator 2 und dem Schaltelement 18 eine solche ergänzt werden.

Wird eine Hochsetzstellerschaltung eingesetzt, ist auch kein zusätzliches Schaltelement zum Herabsenken der Leerlaufspannung erforderlich, da der Hochsetzsteller dem DC/AC-Wandler 12 vorgeschaltet und dem Photovoltaik-Generator 2 nachgeschaltet ist. Der Hochsetzsteller wird dann entsprechend dem Verfahren aus Anspruch 11 getaktet, damit der Photovoltaik-Generator 2 im Kurzschlussbetrieb betrieben werden kann.

Wenn eine Induktivität 22 vorhanden ist, dann kann das Schaltelement 18 strombegrenzt betrieben werden, wie Fig. 7 veranschaulichen soll. Dazu wird der Strom durch das Schaltelement 18 bzw. durch die Induktivität 22 gemessen und bei einer bestimmten Stromstärke, die deutlich über dem normalen Generatorstrom liegt, das Schaltelement 18 ausgeschaltet. Mit einer bestimmten Taktfrequenz, bzw. nach Unterschreiten einer vorgegebenen, kleineren Stromstärke in der Induktivität 22, wird das Schaltelement 18 wieder eingeschaltet. Der Vorteil dieser Lösung liegt darin, dass der Energieinhalt der Eingangskapazität 20 über das Hochsetzstellerprinzip in den Pufferkondensator 14 übertragen wird und nicht in Wärme umgesetzt werden muss. Dadurch ergibt sich eine hohe Toleranz der Schaltung gegenüber der Größe der Eingangskapazität.

Die gezeigten Schaltungen sind Spannungsbegrenzungs- und Schutzschaltungen für Solarwechselrichter.

Bei den Schaltungen wird direkt, wie die Figuren 1, 2, 3, 4 und 5 zeigen, oder über eine Induktivität, wie die Figuren 6 und 7 zeigen, ein Leistungsschalter 18 parallel zum Photovoltaik-Generator 2 angeordnet

Der Wechselrichter 3 beinhaltet bei den dargestellten Varianten mindestens einen Pufferkondensator 14 und einen DC/AC-Wandler 12 , wobei der Pufferkondensator 14 vorzugsweise über eine Schutzdiode 17, an den Halbleiterschalter angeschlossen ist. Der Leistungsschalter 18 ist ein Halbleiterschalter, wie ein Transistor oder ein Thyristor, der ausschaltbar oder löschbar ist.

Vorzugsweise wird die Spannung an dem Pufferkondensator 14 gemessen. Der Leistungsschalter 18 wird praktisch bei großen gemessenen Spannungen ein- und bei kleinen gemessenen Spannungen ausgeschaltet.

Der Spannungsgrenzwert der nicht zu überschreitenden Spannung liegt vorzugsweise bei unter 600 Volt, so dass Vorschriften in USA eingehalten werden können.

Die Figuren 2 bis 7 zeigen beispielhafte Ausführungen von Schutz- und Regelschaltungen für Solaranlagen zum Einbau in Solarwechselrichter. Die Erfindung kann aber auch durch andere Schutz- und Regelschaltungen realisiert werden. So können grundsätzlich auch andere abschaltbare Halbleiterschaltelemente oder geeignete mechanische Schalter zum Kurzschließen eingesetzt werden. Ebenfalls kann der Zwischenkreis auch aus einer Drossel statt aus einem Pufferkondensator bestehen.

### Bezugszeichenliste

- 1: Photovoltaik-Anlage
- 2: Generator
- 3: Wechselrichter
- 4, 5: Anschlussklemmen
- 6: Stromversorgungsnetz
- 7,8: Anschlussklemmen
- 9,10: Anschlussklemmen
- 11: Zwischenkreis
- 12: DC/AC-Wandler
- 13: Spannungsbegrenzungs-Schaltung
- 14: Pufferkondensator
- 15: Halbleiterschaltelemente
- 16: Transformator
- 17: Schutzdiode
- 18,19: Kurzschluss-Schaltelement
- 20: Interne Kapazität des Photovoltaik-Generators 2
- 21: Lastwiderstand
- 22: Induktivität

## Patentansprüche

1. Photovoltaik-Wechselrichter (3) für den Einsatz in einer Photovoltaik-Anlage (1) mit einem Gleichspannungseingang (Anschlüsse 4;5) für den Anschluss an einen Solargenerator (2) und einem Wechselspannungsausgang (Anschlüsse 7;8) für die Einspeisung in ein Energieversorgungsnetz (6) sowie einem DC/AC-Wandler (12) mit Halbleiterschaltelementen (15) und einem Zwischenkreis (11), wobei parallel zum Generator (2) mindestens ein Kurzschluss-Schaltelement (18) angeschlossen ist, wodurch ein maximaler Spannungswert weder an den Anschlussklemmen (4;5) des Solargenerators (2) noch zwischen den Eingangsklemmen (9;10) des DC/AC Wandlers (12) überschritten wird,
**dadurch gekennzeichnet,**
**dass** der Wechselrichter (3) im Zwischenkreis (12) einen Pufferkondensator (14) aufweist, der über eine Schutzdiode (17) an den Generator (2) angeschlossen ist, so dass der Pufferkondensator (14) bei Ansteuerung des Kurzschluss-Schaltelementes (18) nicht entladen wird, wobei der Generator (2) entsprechend einer Taktung im
Kurzschlussbetrieb arbeitet, wobei das Kurzschluss-Schaltelement (18) der Schalter eines Hochsetzstellers (18,22) des Wechselrichters (3) ist, dass zwischen dem Generator (2) und dem Schaltelement (18) eine Induktivität (22) angeschlossen ist, um das Schaltelement (18) strombegrenzt zubetreiben.

2. Wechselrichter nach Anspruch 1,
**dadurch gekennzeichnet,**
**dass** das Kurzschluss-Schaltelement (18) ein Halbleiterschalter ist.

3. Wechselrichter nach Anspruch 1,
**dadurch gekennzeichnet,**
**dass** das Kurzschluss-Schaltelement (18) ein Transistor ist.

4. Wechselrichter nach Anspruch 1,
**dadurch gekennzeichnet,**
**dass** das Kurzschluss-Schaltelement (18) ein abschaltbarer Thyristor (GTO) ist.

5. Wechselrichter nach Anspruch 1,
**dadurch gekennzeichnet,**
**dass** das Kurzschluss-Schaltelement (18) ein mechanischer Schalter ist.

6. Wechselrichter nach einem der vorhergehenden Ansprüche,
**dadurch gekennzeichnet,**
**dass** in Reihe zum Schaltelement (18) ein Lastwiderstand (21) angeordnet ist.

7. Wechselrichter nach einem der voranstehenden Ansprüche,
**dadurch gekennzeichnet,**
**dass** der Generator (2) ein Photovoltaik-Generator ist.

8. Verfahren zum Schutz vor Überspannung einer Photovoltaik-Anlage (1) mit einem Photovoltaik-Wechselrichter (3) nach einem der vorhergehenden Ansprüche, **dadurch gekennzeichnet,**
**dass** die Spannung an den Eingangsklemmen (9;10) des DC/AC-Wandlers (12) permanent erfasst wird und dass das Kurzschluss-Schaltelement (18) über eine Regelschaltung so angesteuert wird, dass es bei hohen Spannungen an den Eingangsklemmen (9;10) ein- und bei niedrigen Spannungen an den Eingangsklemmen (9;10) ausgeschaltet wird.

9. Verfahren nach Anspruch 8,
**dadurch gekennzeichnet,**
**dass** die Regelschaltung ein Zweipunkt-Regler ist.

10. Verfahren nach Anspruch 8,
**dadurch gekennzeichnet,**
**dass** die Regelschaltung ein P-Regler ist.

11. Verfahren nach Anspruch 8,
**dadurch gekennzeichnet,**
**dass** die Regelschaltung ein PI-Regler ist.

12. Verfahren nach Anspruch 8,
**dadurch gekennzeichnet,**
**dass** die Regelschaltung ein PID-Regler ist.

13. Verfahren nach einem der Ansprüche 8 bis 12,
**dadurch gekennzeichnet,**
**dass** der Grenzwert der nicht zu überschreitenden hohen Spannung an den Anschlussklemmen (4;5) oder (9;10) bei 600 Volt liegt.

14. Verfahren nach einem der Ansprüche 8 bis 13,
zum Schutz vor Überspannung durch Leerlaufspannung eines Generators (2) nach einem Einschalten der Stromerzeugungsanlage (1).

## Claims

1. A photovoltaic inverter (3) for use in a photovoltaic plant (1) with a direct voltage input (terminals 4; 5) for connection of a solar generator (2) and with an alternating voltage output (terminals 7; 8) for feeding into a grid (6) as well as with a DC-AC converter (12) with semiconductor switch elements (15) and with an intermediate circuit (11), at least one short-circuit switch element (18) being connected parallel to the generator (2) so that a maximum voltage value is exceeded neither at the terminals (4; 5) of the solar generator (2) nor between the input terminals (9; 10) of the DC-AC converter (12),
**characterized in**
**that,** in the intermediate circuit (12), the inverter (3) comprises a buffer capacitor (14) that is connected to the generator (2) via a protective diode (17) so that said buffer capacitor (14) will not be unloaded when the short circuit switch element (18) is triggered, said generator (2) working, in accordance with a clock rate, in the short-circuit mode of operation, said short-circuit switch element (18) being the switch of a boost converter (18, 22) of the inverter (3), that an inductance (22) is connected between the generator (2) and the switch element (18) in order to operate the switch element (18) with current limitation.

2. The inverter as set forth in claim 1,
**characterized in**
**that** the short-circuit switch element (18) is a semiconductor switch.

3. The inverter as set forth in claim 1,
**characterized in**
**that** the short-circuit switch element (18) is a transistor.

4. The inverter as set forth in claim 1,
**characterized in**
**that** the short-circuit switch element (18) is a thyristor (GTO) that may be switched off.

5. The inverter as set forth in claim 1,
**characterized in**
**that** the short-circuit switch element (18) is a mechanical switch.

6. The inverter as set forth in any one of the previous claims,
**characterized in**
**that** a load resistor (21) is connected in series with the switch element (18).

7. The inverter as set forth in any one of the previous claims,
**characterized in**
**that** the generator (2) is a photovoltaic generator.

8. A method for overvoltage protection of a photovoltaic plant (1) with a photovoltaic inverter (3) as set forth in any one of the previous claims,
**characterized in**
**that** the voltage is permanently sensed at the input terminals (9; 10) of the DC-AC converter (12) and that the short-circuit switch element (18) is triggered via a control circuit so as to be switched on when the voltages at the input terminals (9; 10) are high and to be switched off when the voltages at the input terminals (9; 10) are low.

9. The method as set forth in claim 8,
**characterized in**
**that** the control circuit is a two level controller.

10. The method as set forth in claim 8,
**characterized in**
**that** the control circuit is a P controller.

11. The method as set forth in claim 8,
**characterized in**
**that** the control circuit is a PI controller.

12. The method as set forth in claim 8,
**characterized in**
**that** the control circuit is a PID controller.

13. The method as set forth in any one of the claims 8 through 12,
**characterized in**
**that** the not to be exceeded limit value of the high voltage at the terminals (4; 5) or (9; 10) is about 600 volt.

14. The method as set forth in any one of the claims 8 through 13, for protection against overvoltage through off-load voltage of a generator (2) after the current generating plant (1) has been switched on.

## Revendications

1. Onduleur photovoltaïque (3) destiné à être utilisé dans une installation photovoltaïque (1) avec une entrée de tension continue (raccords 4 ; 5) pour le raccordement à un générateur solaire (2) et avec une sortie de tension alternative (raccords 7 ; 8) pour l'alimentation dans un réseau d'alimentation en énergie (6) ainsi qu'avec un convertisseur courant continu/alternatif (12) avec des éléments de commutation semi-conducteurs (15) et avec un circuit intermédiaire (11), au moins un élément de commutation court-circuit (18) étant connecté en parallèle avec le générateur (2) de sorte qu'une valeur de tension maximale n'est dépassée ni aux bornes de raccordement (4 ; 5) du générateur solaire (2) ni entre les bornes d'entrée (9 ; 10) du convertisseur courant continu/alternatif (12),
**caractérisé en ce**
**que** l'onduleur (3) comporte, dans le circuit intermédiaire (12), un condensateur tampon (14) qui est raccordé au générateur (2) par l'intermédiaire d'une diode de protection (17) de sorte que le condensateur tampon (14) ne se décharge pas lorsque l'élément de commutation court-circuit (18) est activé, le générateur (2) travaillant en mode court-circuit selon une fréquence d'horloge, l'élément de commutation court-circuit (18) étant le commutateur d'un hacheur élévateur (18, 22) de l'onduleur (3), qu'une inductance (22) est raccordée entre le générateur (2) et l'élément de commutation (18) afin de faire fonctionner l'élément de commutation (18) avec une limitation de courant.

2. Onduleur selon la revendication 1,
**caractérisé en ce**
**que** l'élément de commutation court-circuit (18) est un commutateur semi-conducteur.

3. Onduleur selon la revendication 1,
**caractérisé en ce**
**que** l'élément de commutation court-circuit (18) est un transistor.

4. Onduleur selon la revendication 1,
**caractérisé en ce**
**que** l'élément de commutation court-circuit (18) est un thyristor (GTO) apte à être déconnecté.

5. Onduleur selon la revendication 1,
**caractérisé en ce**
**que** l'élément de commutation court-circuit (18) est un commutateur mécanique.

6. Onduleur selon l'une quelconque des revendications précédentes,
**caractérisé en ce**
**qu'**une résistance de charge (21) est montée en série avec l'élément de commutation (18).

7. Onduleur selon l'une quelconque des revendications précédentes,
**caractérisé en ce**
**que** le générateur (2) est un générateur photovoltaïque.

8. Procédé de protection contre une surtension d'une installation photovoltaïque (1) avec un onduleur (3) photovoltaïque selon l'une quelconque des revendications précédentes,
**caractérisé en ce**
**que** la tension aux bornes d'entrée (9 ; 10) du convertisseur courant continu/alternatif (12) est mesurée en permanence et que l'élément de commutation court-circuit (18) est piloté par l'intermédiaire d'un circuit de commande de manière à être mis en marche lorsque les tensions aux bornes d'entrée (9 ; 10) sont élevées et à être mis hors circuit lorsque les tensions aux bornes d'entrée (9 ; 10) sont faibles.

9. Procédé selon la revendication 8,
**caractérisé en ce**
**que** le circuit de commande est un régulateur tout ou rien.

10. Procédé selon la revendication 8,
**caractérisé en ce**
**que** le circuit de commande est un régulateur P.

11. Procédé selon la revendication 8,
**caractérisé en ce**
**que** le circuit de commande est un régulateur PI.

12. Procédé selon la revendication 8,
**caractérisé en ce**
**que** le circuit de commande est un régulateur PID.

13. Procédé selon l'une quelconque des revendications 8 à 12,
**caractérisé en ce**
**que** la valeur limite de la tension élevée qui ne doit pas être dépassée aux bornes de raccordement (4 ; 5) ou (9 ; 10) est de l'ordre de 600 volt.

14. Procédé selon l'une quelconque des revendications 8 à 13,
pour protéger contre les surtensions dues à la tension à vide d'un générateur (2) après la mise en service de l'installation de production électrique (1).
